# EUROPEAN PATENT APPLICATION

(11) **EP 4 496 317 A1**
(43) Date of publication of application: **22.01.2025**
(21) Application number: 23769579.6
(22) Date of filing: 03.03.2023
(51) Int. Cl.: H04N 21/2187

(54) **VIDEO GENERATION METHOD AND APPARATUS, AND DEVICE, STORAGE MEDIUM AND PROGRAM PRODUCT**

(30) Priority: 14.03.2022 CN 202210259142
(71) Applicant: Beijing Zitiao Network Technology Co., Ltd., Beijing 100190 (CN)
(72) Inventor: ZHOU, Pingping, Beijing 100086 (CN); YE, Cong, Beijing 100086 (CN); CAI, Xiaochun, Beijing 100086 (CN)
(74) Representative: Dentons UK and Middle East LLP
(86) International application number: PCT/CN2023/079499
(87) International publication number: WO 2023/174073

(57) **Abstract**

Provided are a video generation method and apparatus, and a device, a storage medium and a program product. The method comprises: acquiring live broadcast room singing information and live broadcast interaction information; acquiring a target video template; and based on the live broadcast room singing information and the live broadcast room interaction information, generating a target video by using the target video template. In this way, diverse requirements of users are met, thereby improving the user experience.

## Description

### CROSS-REFERENCE TO RELATED APPLICATIONS

The present disclosure is based on and claims the priority to the Chinese application No. 202210259142.4 filed on March 14, 2022, the disclosure of which is incorporated by reference herein in its entirety.

### TECHNICAL FIELD

The present disclosure relates to the technical field of video processing, and in particular, to a video generation method and apparatus, and a device, a storage medium and a program product.

### BACKGROUND

With the rapid development of Internet technology and terminal devices, various terminal devices (such as mobile phones and tablets) have become an indispensable part of people's work and life. Moreover, with the increasing popularity of the terminal devices, online live technology has come into being.

Currently, an online live is often performed in a form of a live streaming channel (or referred to as a chat room), and in order to enable users to view live content, the live content is usually recorded to generate a video work. However, existing live content record and video generation modes are single, so that diverse requirements of the users cannot be met, and the user experience is influenced.

### SUMMARY

An embodiment of the present disclosure provides a video generation method and apparatus, and a device, a storage medium and a program product.

In a first aspect, an embodiment of the present disclosure provides a video generation method, comprising:
acquiring performance information and interaction information in a live streaming channel;
acquiring a target video template; and
generating, based on the performance information and the interaction information, a target video by using the target video template.

In a second aspect, an embodiment of the present disclosure provides a video generation apparatus, comprising:
an information acquisition module, configured to acquire performance information and interaction information in a live streaming channel;
a template acquisition module, configured to acquire a target video template; and
a video generation module, configured to generate, based on the performance information and the interaction information, a target video by using the target video template.

In a third aspect, an embodiment of the present disclosure provides an electronic device, comprising:
one or more processors; and
storage means configured to store one or more programs,
the one or more programs, when executed by the one or more processors, causing the one or more processors to implement the video generation method according to any of the first aspect described above.

In a fourth aspect, an embodiment of the present disclosure provides a computer-readable storage medium having thereon stored a computer program which, when executed by a processor, implements the video generation method according to any of the first aspect described above.

In a fifth aspect, an embodiment of the present disclosure provides a computer program product, comprising a computer program or instructions which, when executed by a processor, implement the video generation method as described according to any of the first aspect described above.

### BRIEF DESCRIPTION OF THE DRAWINGS

In conjunction with the accompanying drawings and with reference to the following implementations, the above and other features, advantages, and aspects of the embodiments of the present disclosure will become more apparent. Throughout the drawings, the same or similar reference numbers refer to the same or similar elements. It should be understood that the drawings are schematic and that components and elements are not necessarily drawn to scale.
Fig. 1 is a flow diagram of a video generation method in an embodiment of the present disclosure;
Fig. 2 is a flow diagram of another video generation method in an embodiment of the present disclosure;
Fig. 3 is a schematic diagram of a video generation interface in an embodiment of the present disclosure;
Fig. 4 is a schematic diagram of a video editing interface in an embodiment of the present disclosure;
Fig. 5 is a schematic diagram of a video editing interface in an embodiment of the present disclosure;
Fig. 6 is a schematic diagram of a video editing interface in an embodiment of the present disclosure;
Fig. 7 is a schematic diagram of a video editing interface in an embodiment of the present disclosure;
Fig. 8 is a schematic structural diagram of a video generation apparatus in an embodiment of the present disclosure;
Fig. 9 is a schematic structural diagram of an electronic device in an embodiment of the present disclosure.

### DETAILED DESCRIPTION

The embodiments of the present disclosure will be described in more detail below with reference to the accompanying drawings. While certain embodiments of the present disclosure are shown in the drawings, it should be understood that the present disclosure may be implemented in various forms and should not be construed as limited to the embodiments set forth herein, which are provided for a more complete and thorough understanding of the present disclosure instead. It should be understood that the drawings and the embodiments of the present disclosure are for exemplary purposes only and are not intended to limit the scope of protection of the present disclosure.

It should be understood that various steps recited in method implementations of the present disclosure may be performed in a different order, and/or performed in parallel. Furthermore, the method implementations may comprise additional steps and/or omit performing the illustrated steps. The scope of the present disclosure is not limited in this respect.

The term "comprising" and variations thereof used herein are intended to be open-ended, i.e., "comprising but not limited to". The term "based on" is "at least partially based on". The term "one embodiment" means "at least one embodiment"; the term "another embodiment" means "at least one other embodiment"; and the term "some embodiments" means "at least some embodiments". Definitions related to other terms will be given in the following description.

It should be noted that the concepts "first", "second", and the like mentioned in the present disclosure are only used for distinguishing different devices, modules or units, and are not used for limiting the order or interdependence of functions performed by the devices, modules or units.

It should be noted that modifications of "a" or "a plurality" mentioned in this disclosure are intended to be illustrative rather than restrictive, and that those skilled in the art should appreciate that they should be understood as "one or more" unless otherwise explicitly stated in the context.

Names of messages or information exchanged between a plurality of devices in the implementations of the present disclosure are for illustrative purposes only, and are not intended to limit the scope of the messages or information.

Currently, an online live is often performed in a form of a live streaming channel (or referred to as a chat room), and in order to enable a user to repeatedly view live content, the live content is usually recorded to generate a video work.

Currently, there are two main solutions for recording the live content to generate a video work: 1) performing simple screen recording on live pictures of a live streaming channel, comprising: recording with comments, bullet comments, gift animation effects and the like together, and recording with the comments, the bullet comments, the gift animation effects and the like removed; 2) only performing an entire process record of sound information of a live streaming channel, which is called an audio work.

In the first solution, only simple screen recording is performed on the live pictures of the live streaming channel, and a video obtained by the screen recording cannot be edited, and in the second solution, only a pure audio work is recorded, without matching suitable live scene pictures for the generated pure audio work, so that the generated audio work lack an atmosphere, and cannot drive viewing and listening.

In order to solve the above problem, an embodiment of the present disclosure provides a video generation method, in which a target video is generated by using the target video template based on the performance information and the interaction information in a live streaming channel, to match suitable scene pictures for the live content of pure audio to generate a video work, so that the atmosphere of the audio work is enhanced, diverse requirements of users are met, and the user experience is improved. The video generation method provided in the embodiment of the present disclosure will be described in detail below in conjunction with the accompanying drawings.

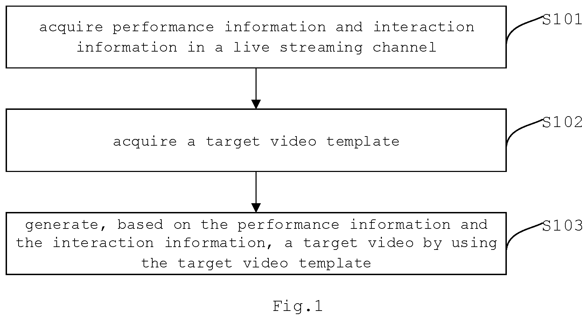

Fig. 1 is a flow diagram of a video generation method in an embodiment of the present disclosure, this embodiment is applicable to a case where live content in a live streaming channel is recorded to generate a video, this method may be executed by a video generation apparatus, and the video generation apparatus may be implemented in software and/or hardware, and may be configured in an electronic device.

For example, the electronic device may be a mobile terminal, a fixed terminal, or a portable terminal, such as a mobile phone, a station, a unit, a device, a multimedia computer, a multimedia tablet, an Internet node, a communicator, a desktop computer, a laptop computer, a notebook computer, a netbook computer, a tablet computer, a personal communication system (PCS) device, a personal navigation device, a personal digital assistant (PDA), an audio/video player, a digital camera/video camera, a positioning device, a television receiver, a radio broadcast receiver, an e-book device, a game device, or any combination thereof, including accessories and peripherals of these devices or any combination thereof.

For another example, the electronic device may be a server, wherein the server may be a physical server or a cloud server, and the server may be one server or a server cluster.

As shown in Fig. 1, the video generation method provided in the embodiment of the present disclosure mainly comprises the following steps:
S101, acquiring performance information and interaction information in a live streaming channel.

The performance information may comprise: performance user information, performance audio information, and sung song information of the live streaming channel, which can be, for example, streamer client user information, streamer client performance audio information, guest performance audio information and the like. The streamer client user information of the live streaming channel may comprise one or more of: a streamer client user avatar, a streamer client user nickname, and the like. The sung song information may comprise one or more of lyrics of a sung song, or a title of the sung song. The performance user information, the performance audio information, and the sung song information of the live streaming channel can be specifically singing user information, singing audio information, and sung song information corresponding to a recorded singing segment.

The interaction information may be understood as interaction information within the live streaming channel, such as interaction information between a streamer client and a viewer during this live, interaction information between viewers, and the like. Further, the interaction information may comprise one or more of: the number of likes received for the song, information of a gift received for the song, information of an expression interaction for the song, information of comment content for the song, a popularity value when the song ends, information of the received likes corresponding to the performance segment(i.e., information of likes received in the process of performance the performance segment), gift information corresponding to the performance segment, and comment information corresponding to the performance segment. The information of a gift received for the song comprises one or more of: the number of times the gift has been received for the song, gift content, etc. The information of an expression interaction for the song comprises one or more of: the number of times the expression has been interacted for the song, a nickname and avatar of a user sending the interacted expression, etc.

In one embodiment, the performance segment is acquired by recording, and accordingly, before the acquiring performance information and interaction information in a live streaming channel, the method further comprises: in response to a recording operation of a viewer side for a live streaming channel, sending a recording request to a server, so as to send the recording request to a streamer client through the server; and when the streamer client permits recording, acquiring a recording segment as the performance segment. Or, in response to a recording operation of a streamer client for the live streaming channel, a recording segment is acquired as the performance segment. The recording operation for a live streaming channel may be a trigger operation of the side requesting to record on a recording button within the live streaming channel, which is not specifically limited in this embodiment.

Further, after responding to a recording operation for the live streaming channel, the side requesting to record generates a recording request for the live streaming channel, and sends the recording request to a streamer client through a server. After receiving the recording request, the streamer client displays prompt information on a display interface, wherein the prompt information is used for prompting the streamer client user that there is a viewer user requesting to record a video and whether he agrees the side requesting to record that corresponds to the viewer user on recording the video. In response to passing the recording request, it is indicated that the streamer client user agrees with the viewer user on recording the video, and at this time, the streamer client sends information of agreeing to record to the side requesting to record through the server, and after receiving the information of agreeing to record, the side requesting to record acquires a recording segment as the performance segment.

Further, in response to not passing the recording request, it is indicated that the streamer client user disagrees with the viewer user on recording the video, and at this time, the streamer client sends information of disagreeing to record to the side requesting to record through the server, the information of disagreeing to record being used for prompting the user of the side requesting to record that the streamer client user disagrees with video recording.

In this embodiment, when the streamer client passes the recording request, the viewer user can record interested live content, enhancing the interaction effect among the users, so that the viewer user can also make his favorite video.

In one embodiment, before the acquiring performance information and interaction information in a live streaming channel, the method further comprises: in response to a recording operation for the live streaming channel, acquiring a recording segment as the performance segment.

In this embodiment, if a video recording button is in an on state before the live starts, a recording segment (a segment from the start of the live to a recording pause) of the live streaming channel can be acquired as the performance segment when the start of the live is detected. If an operation of triggering a video recording start button is detected during the live, when the operation of triggering the video recording start button is detected, a recording segment (a segment from a recording start to a recording pause) of the live streaming channel is acquired as the performance segment.

In one embodiment, the acquiring performance information and interaction information in a live streaming channel comprises: acquiring a target performance segment corresponding to the live streaming channel; and taking performance information and interaction information corresponding to the target performance segment as the performance information and the interaction information, the target performance segment being a performance segment with a performance score greater than a preset threshold that corresponds to the live streaming channel, namely a high-quality performance segment or a highlight performance segment. That is to say, the recording segment may comprise a plurality of performance segments, in which a performance segment with a performance score greater than the preset threshold is taken as the target performance segment. The performance score of the performance segment can be acquired based on a known neural network scoring model, which is not specifically limited.

In one embodiment, in the performance process of the streamer client user, each sung sentence can be scored, and when a plurality of sentences in succession have a score reaching a preset score, it is determined that a performance segment of the streamer client user is a target performance segment. A score of each performance segment can also be obtained according to scores of sentences corresponding to each performance segment, and a performance segment with a score greater than the preset score in the performance segments is taken as the target performance segment.

When there is a scoring criterion of C, B, A, S, SS, SSS in the application, the preset score may be set to S or SS, etc. It should be noted that, in this embodiment, there are only exemplary explanations for the preset score, rather than limitations.

"A plurality" in "a plurality of sentences have a score reaching a preset score" can be set according to actual conditions. For example: there may be 3 or 5 sentences, which is not specifically limited in this embodiment.

In this embodiment, after it is determined that the streamer client user performance segment is the target performance segment, acquiring the performance information and the interaction information corresponding to the target performance segment of the live streaming channel as the performance information and the interaction information is started, so that the recorded performance audio can be ensured to be a high-quality audio, and the quality of a subsequently generated video is further ensured.

In one embodiment, the acquiring a target performance segment corresponding to the live streaming channel comprises: acquiring a performance segment of the live streaming channel within a preset time period; dividing the performance segment into a plurality of target performance segments according to a preset requirement; and for at least one target performance segment, performing the step of acquiring a target video template and the subsequent steps thereof.

The preset time period may be a period from a time of starting the recording to a time of ending the recording. For the time of starting the recording, reference may be made to the description in the above embodiment, and the time of ending the recording may be a live end time, or a corresponding time when a trigger operation on a video recording closing button is detected.

The preset requirement may comprise: a recording segment with most likes, a recording segment with most comments, a recording segment with most online users, a recording segment with a best score, and the like.

Dividing the recording file into a plurality of recording segments according to a preset requirement may comprise: dividing the recorded file into the recording segment with most likes, the recording segment with most comments, the recording segment with most online users, the recording segment with a best score and the like. Accordingly, different target video templates can be adopted for the target performance segments.

In one embodiment, it is possible to, in response to a performance recording pause operation, display at least one performance segment identification, as well as at least one piece of performance information and at least one piece of interaction information that correspond to the at least one performance segment identification, and in response to a selection operation for target performance information and target interaction information corresponding to a target performance segment identification, take the target performance information and the target interaction information as the performance information and the interaction information. The performance segment may be a recording segment after the performance recording start and before the performance recording pause, or may be a part of the recording segment, such as a highlighted segment of the recording segment. The target performance segment identification may be any performance segment identification in the at least one performance segment identification. The performance segment identification may be a serial number, a segment name, a description, and the like corresponding to the performance segment. The target performance information is performance information in a selected state in the at least one piece of performance information, and the target interaction information is interaction information in a selected state in the at least one piece of interaction information. The user can select all or part of performance information corresponding to one performance segment identification as the performance information for generating a target video, or select all or part of performance information corresponding to a plurality of performance segment identifications as the performance information for generating a target video; and the user can also select all or part of interaction information corresponding to one performance segment identification as the interaction information for generating a target video, or select all or part of interaction information corresponding to a plurality of performance segment identifications as the interaction information for generating a target video. Exemplarily, the at least one piece of interaction information may be comment interaction information and/or like interaction information, and the user may select the comment interaction information and/or the like interaction information as the interaction information to generate a target video. Therefore, abundant creation controls are provided for the user, meeting diverse requirements of the user, and improving the user experience.

The method further comprise S102, acquiring a target video template.

The target video template may be understood as a template required for generating the target video, and the video template may be a script file. The video template is used for adding the performance information and the interaction information to preset positions of the video template to generate the target video.

In this embodiment, the acquiring a target video template may be arbitrarily selecting one or more video templates from a video template database.

In one embodiment, if there are a plurality of target performance segments, the plurality of target performance segments may use one same target video template or different target video templates.

In one embodiment, the acquiring a target video template comprises: in response to a template acquisition request, displaying one or more candidate video templates; and in response to a selection operation for any candidate video template in the one or more candidate video templates, taking the selected candidate video template as the target video template.

In response to the template acquisition request may comprise: in response to the template acquisition request, after a trigger operation on a template acquisition button is detected; and may also comprise: in response to the template acquisition request, after it is detected that acquiring the performance information and the interaction information is completed.

The candidate video template may be a template matched with the performance information and the interaction information determined in response to a user request, for example: determining a video template with a matching degree with the performance information and the interaction information being greater than a preset threshold as a candidate video template. Specifically, the client sends a template acquisition request to the server, and after receiving the template acquisition request, the server determines a corresponding candidate template based on the performance information and the interaction information and then sends the candidate template to the client for display. The matching degree may be determined in a known matching degree determination mode, which is not repeated here.

In this embodiment, the candidate video template is displayed through the performance information and the interaction information, facilitating the user to quickly select a suitable video template.

S103, generating a target video by using the target video template based on the performance information and the interaction information.

In one embodiment, the performance information and the interaction information can be filled into the corresponding positions of the video template to generate the target video.

The video template is provided with at least one reserved position, which is used for filling the performance information and/or interaction information for generating the target video, and can also be used for filling link addresses of the performance information and/or the interaction information for generating the target video. Meanwhile, label information can be set for each reserved position, so that information matched with the label information is filled into the corresponding reserved position. The label information may be a type of the above performance information or interaction information, for example, the avatar of the streamer client user, the nickname of the streamer client user, performance lyrics corresponding to the target performance segment, a song title corresponding to the target performance segment, information of an expression interacted of the song, the number of comments for the song, and the like.

In this embodiment, it is possible to fill, after the live ends, the performance information and the interaction information in corresponding positions of the video template to generate a target video, or to fill, after the song ends, the performance information and the interaction information in corresponding positions of the video template to generate a target video.

In one embodiment, the, generating a target video by using the target video template based on the performance information and the interaction information comprises: based on the audio information corresponding to the performance segment, the song information corresponding to the performance segment, and the interaction information corresponding to the performance segment, generating target audio information and target picture information by using the target video template, and generating the target video based on the target audio information and the target picture information.

The embodiment of the present disclosure provides a video generation method, comprising: acquiring performance information and interaction information in a live streaming channel; acquiring a target video template; and based on the performance information and the interaction information, generating a target video by using a target video template. According to the present disclosure, suitable scene pictures are matched for the live content of pure audio to generate a video work, enhancing an atmosphere of an audio work.

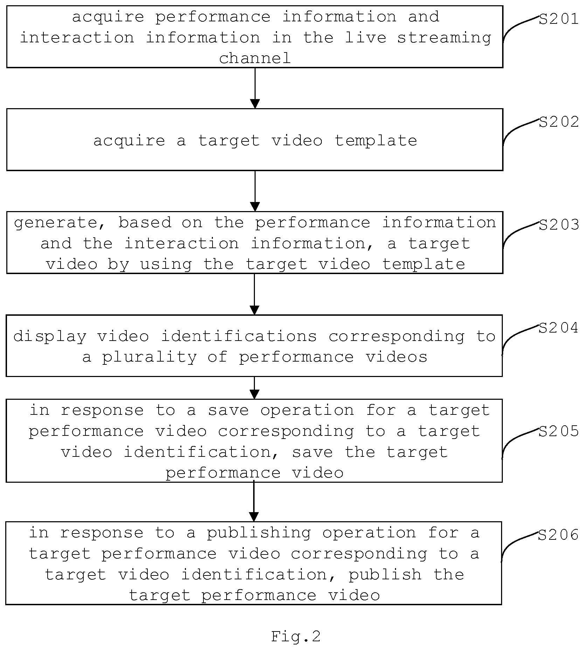

Based on the above embodiment, the above video generation method is further optimized in an embodiment of the present disclosure, and as shown in Fig. 2, the optimized video generation method in the embodiment of the present disclosure mainly comprises:
S201, acquiring performance information and interaction information in a live streaming channel;
S202, acquiring a target video template
S203, generating a target video by using the target video template based on the performance information and the interaction information.

The implementation process and the specific principles of S201 to S203 are the same as those of S101 to S103 in the foregoing embodiment, so that reference may be specifically made to the description in the foregoing embodiment, which is not repeated here.

The method further comprises S204, displaying video identifications corresponding to a plurality of performance videos.

The target video comprises the plurality of performance videos.

The video identification may comprise feature information of the performance video, such as: a performance video with most likes, a performance videos with most comments, a performance video with most online users, a performance video with a best score and the like.

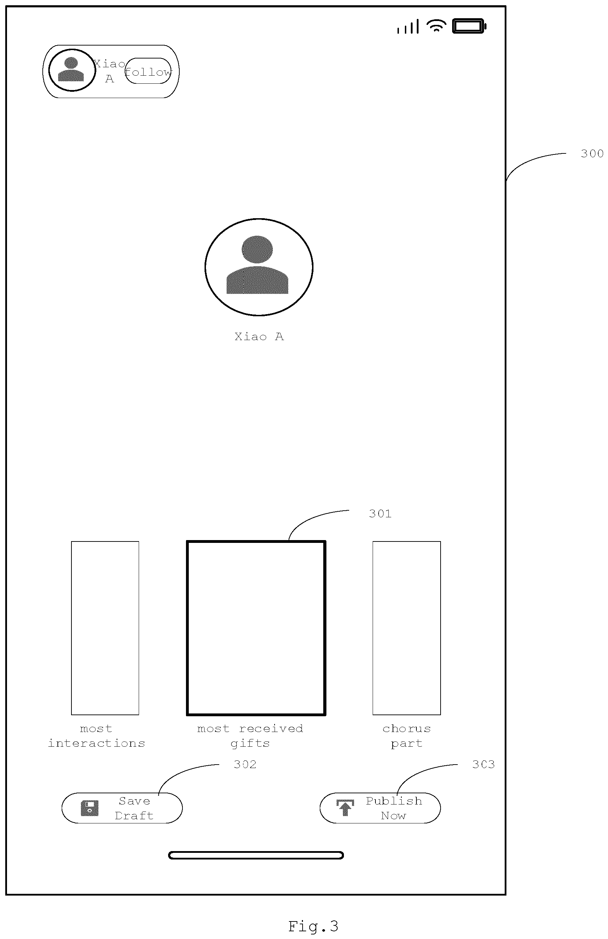

As shown in Fig. 3, an avatar of a streamer client user is displayed in a video generation interface 300, and a name of the streamer client user is displayed below the streamer client user; and in the video generation interface 300, video identifications corresponding to a plurality of already generated performance videos are displayed, such as a performance video 301 corresponding to most received gifts, a performance video corresponding to most interactions, and a performance video corresponding to a chorus part, and the like in Fig. 3.

Further, in response to a swipe operation of the user on the performance video, different performance videos may be displayed in the middle of the video generation interface 300. For example: in Fig. 3, in response to a swipe left operation of the user on the performance video, the performance video corresponding to the chorus part may be displayed in the middle of the video generation interface 300; and in response to a swipe right operation of the user on the performance video, a performance video corresponding to an interaction part may be displayed in the middle of the video generation interface 300.

It should be noted that, the performance video displayed in the middle of the video generation interface 300 is determined as the selected performance video, on which subsequent operations may be performed.

The method further comprises S205, in response to a save operation for a target performance video corresponding to a target video identification, saving the target performance video, the target video identification being any one or more video identifications in video identifications corresponding to the plurality of performance videos.

The target video identification refers to a video identification corresponding to a video which is selected by the user for subsequent edition. The save button may be a virtual button (for example, a "Save Draft" button in the video generation interface 300 shown in Fig. 3), or a physical button (for example, a button for increasing volume in an intelligent terminal, etc.).

For example: in response to a touch operation on the "Save Draft" button in the video generation interface 300, a target performance video displayed in the middle of the video generation interface 300 is saved to a draft box. Further, the target performance video in the draft box can be edited.

The method further comprises S206, in response to a publishing operation for a target performance video corresponding to a target video identification, publishing the target performance video.

The publishing button may be a virtual button (e. g., a "Publish Now" button in the video generation interface 300 shown in Fig. 3) . The trigger operation can be any of single click, double click and touch.

For example, in response to a touch operation on the "Publish now" button in the video generation interface 300, a target performance video displayed in the middle of the video generation interface 300 is saved and published.

It should be noted that, in this embodiment, the execution order of the steps S205 and S206 is not limited, so that it is possible to execute the S205 first and then the S206; it is also possible to execute the S206 first and then the S205; and it is also possible to execute only one of the steps.

In one embodiment, the video generation method provided in the embodiment of the present disclosure further comprises: adding a live streaming channel link in the target video, so as to display the live streaming channel link in a playing process of the target video.

The live streaming channel link is a type of hyperlink in webpage making, which can be quickly anchored to the live streaming channel. For example, the live streaming channel link in this embodiment may be added to the avatar of the streamer client user or the name of the streamer client user in the video generation interface 300, or to a background image of the target video. It should be noted that, in this embodiment, there are only exemplary explanations made for the adding position of the live streaming channel link, rather than limitation.

Further, the method also comprises: in response to an operation on the live streaming channel link, displaying a live interface corresponding to the live streaming channel.

After the video is published, in response to an operation of a viewing user on the live streaming channel link, a live interface corresponding to the live streaming channel is displayed on a terminal interface of the viewing user.

Further, in response to an operation of a viewer user on the live streaming channel link, it is checked whether the live streaming channel is on a live, and if it is on a live, a live interface corresponding to the live streaming channel is displayed on a terminal interface of the viewer user. If the live streaming channel is not on a live, a live streaming channel similar to the live streaming channel is acquired and displayed on the terminal interface of the viewer user.

In this embodiment, the live streaming channel link is added in the target video, so that a revisit user can quickly enter the live streaming channel, simplifying the process of the user entering the live streaming channel, and improving the use experience of the user.

Based on the above embodiment, the, generating a target video by using the target video template based on the performance information and the interaction information comprises: in response to a video editing operation, displaying a video editing interface; in response to an input operation for the video editing interface, acquiring a display parameter of the performance information and/or a display parameter of the interaction information; and based on the display parameter of the performance information and/or the display parameter of the interaction information, generating the target video by using the target video template.

The display parameter of the performance information and/or the display parameter of the interaction information may comprise: a background parameter (a background pattern, background brightness, etc.), a display parameter of lyrics (a font size, color, etc.), a display parameter of a comment (a display position, a display duration, etc.), clipping of a recording segment, a display parameter of an added sticker, and the like.

Further, the target video may be edited before or after it is generated.

In this embodiment, the target video is edited, so that the user can edit a target video generated by using a pure audio file, enhancing the editability of the video, and improving the use experience of the user.

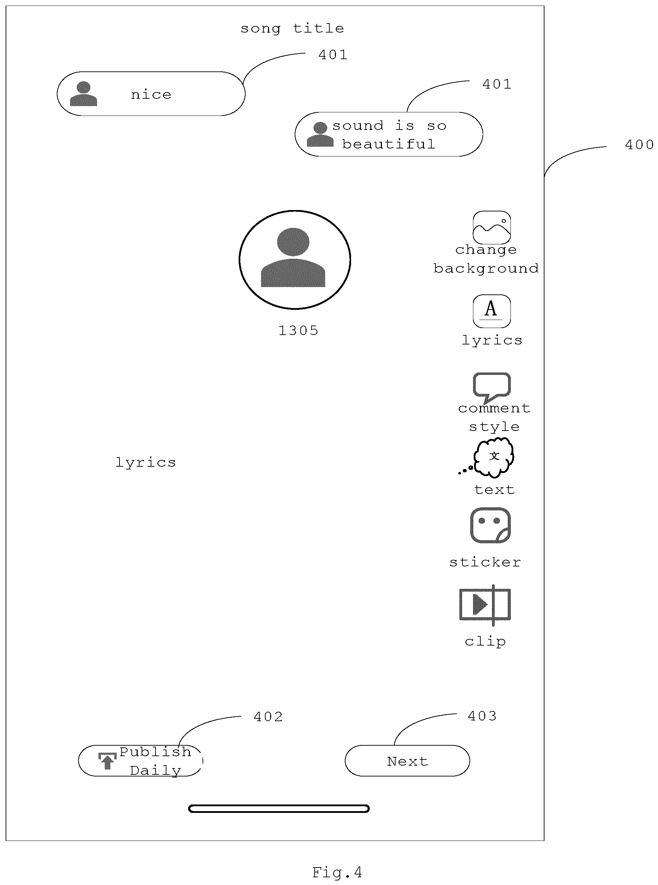

As shown in Fig. 4, it is a video editing interface 400 opened in the embodiment of the present disclosure, wherein a song title corresponding to a current performance segment is displayed at the top of the video editing interface 400, an avatar of a streamer client user is displayed in the middle, and a popularity value when a song ends is displayed below the avatar of the streamer client user; and lyrics corresponding to a target video is displayed in the video editing interface 400; and comment information 401 corresponding to the target video is displayed above the avatar of the streamer client user, the comment information comprising an avatar of a user sending a comment and comment content.

Further, in response to a trigger operation on a "Publish Daily" button 402, the target video is published. In response to a trigger operation on a "Next" button 403, a next content that needs to be edited is displayed on the video editing interface 400.

In this embodiment, editing can be performed on a background of the video, a display style of lyrics, a display style of a comment, a style of text, adding a sticker and a style of the sticker, clipping an audio corresponding to the video, and the like.

In one embodiment, the in response to an input operation for the video editing interface, acquiring a display parameter of the performance information and/or a display parameter of the interaction information comprises: in response to a trigger operation on a comment style button of the video editing interface, displaying, in the video editing interface, all comment styles corresponding to a comment; and in response to a selection operation on the comment style, replacing a current comment style with the selected comment style.

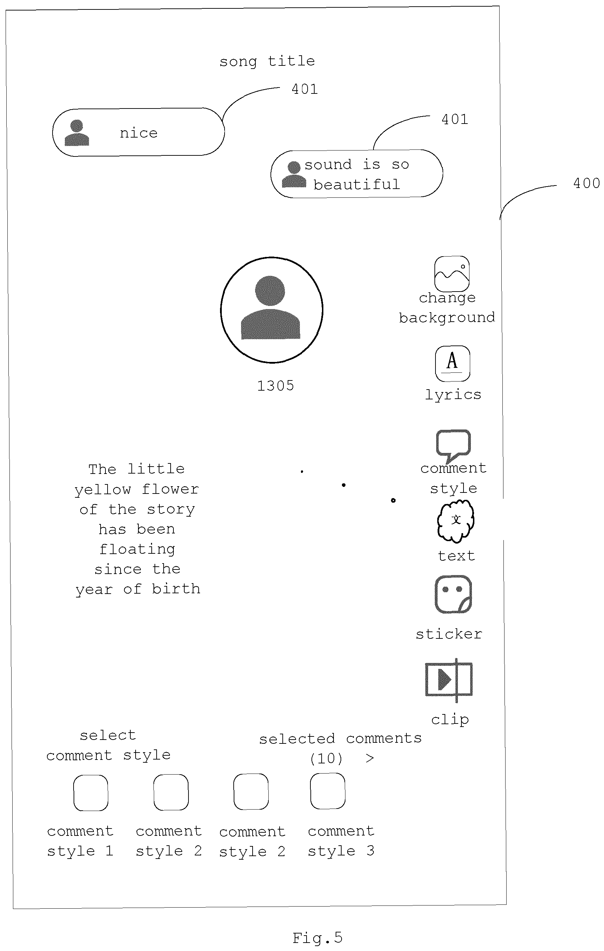

The selection operation on the comment style can be a touch operation on the comment style. Further, as shown in Fig. 5, all comment styles are displayed in a comment style selection box corresponding to the video editing interface 400, and in response to a selection operation of the user on a comment style, a current comment style is replaced with the selected comment style.

Further, as shown in Fig. 5, in this embodiment, comments may also be selected, to select preset-number comments for display, for example: 10 comments thereof are selected for display. The preset-number comments may be several comments with the number of received likes ranked in the top, or may be preset-number comments manually selected by a live user.

In one embodiment, the in response to an input operation on the video editing interface, acquiring a display parameter of the performance information and/or a display parameter of the interaction information comprises: in response to a trigger operation on a lyric style button of the video editing interface, displaying all lyric styles corresponding to lyrics in the video editing interface; and in response to a selection operation on the lyric style, replacing a current lyric style with the selected lyric style.

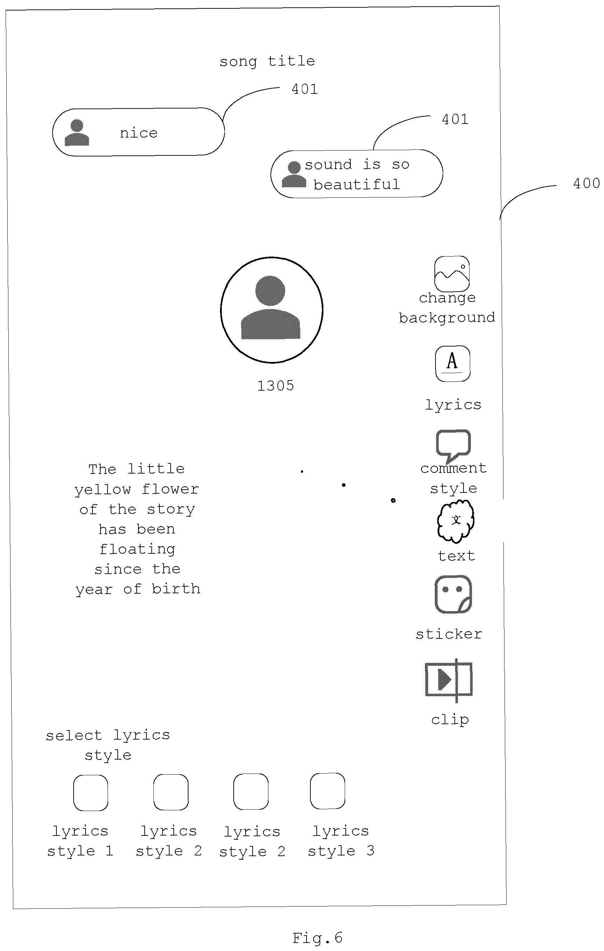

The selection operation on the lyric style can be a touch operation on the lyric style. Further, as shown in Fig. 6, all lyric styles are displayed in a lyric style selection box corresponding to the video editing interface 400, and in response to a selection operation of the user on a lyric style, a current lyric style is replaced with the selected lyric style.

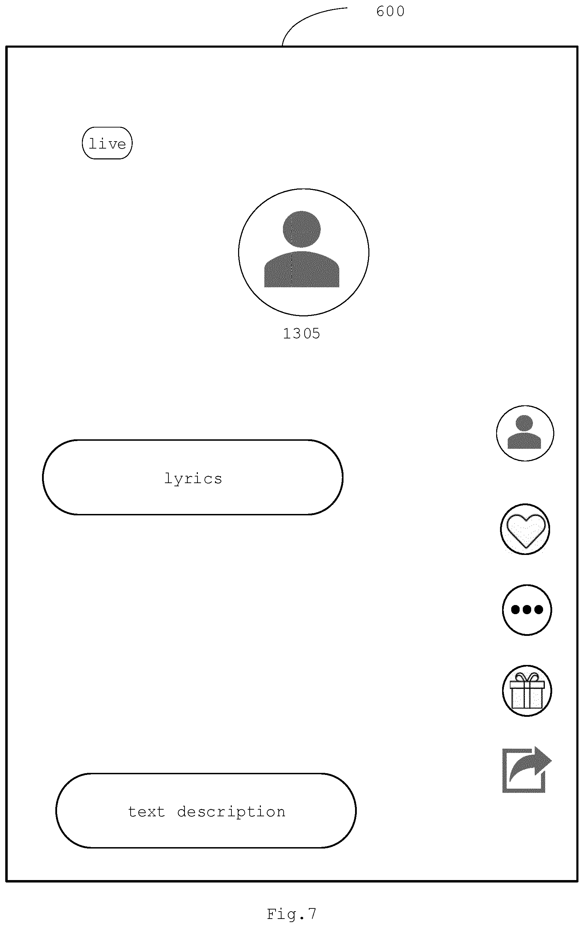

In one embodiment, the edited target video is published, and the target video display interface after the publication is shown in Fig. 7, where a cover image or an avatar of an original singer corresponding to a song in the target video is displayed in the middle of a target video display interface 600, and a corresponding popularity value when the song ends is displayed below the middle; and lyrics corresponding to an audio segment is sequentially displayed below the popularity value. Below the lyrics, the text description input by the user when publishing the video may be displayed. A live streaming channel link is displayed in an upper left corner of the target video display interface 600, and in response to a trigger operation on the link, a jump is made to the live streaming channel corresponding to the streamer client user. In a lower right of the target video display interface 600, related buttons which can be operated by the viewing user, such as a follow button, a comment button, a gift giving button, a forwarding button and the like corresponding to the target video are displayed in sequence.

According to the embodiment of the present disclosure, the suitable live scene pictures are matched for the pure audio work, enhancing the atmosphere of the audio work, and it is possible to edit the target video to set the comment style, add the text description, change the background image, add the sticker and the like, enhancing the interest of the target video.

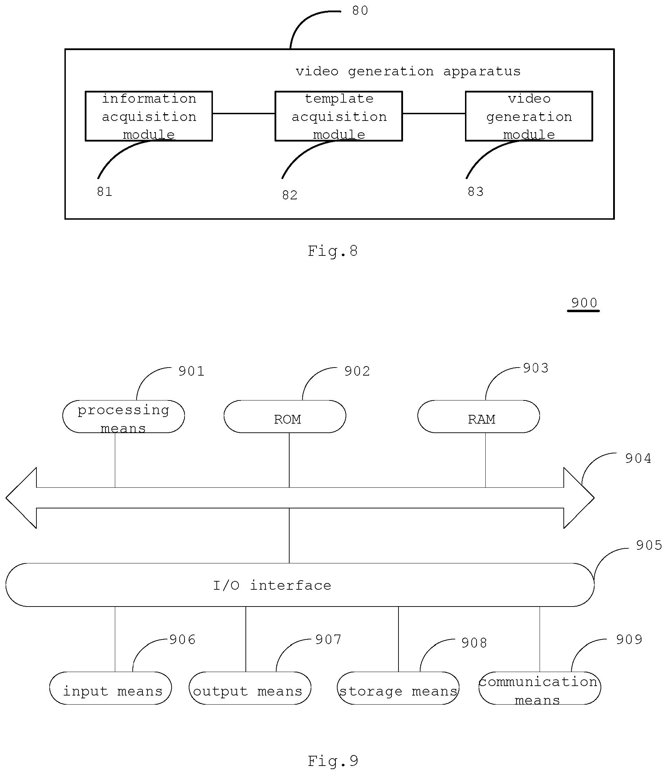

Fig. 8 is a schematic structural diagram of a video generation apparatus in an embodiment of the present disclosure, wherein this embodiment is applicable to a case where a pure audio live of a live streaming channel is recorded to generate a video, the video generation apparatus may be implemented in software and/or hardware, and may be configured in an electronic device.

As shown in Fig. 8, the video generation apparatus 80 provided in the embodiment of the present disclosure mainly comprises: an information acquisition module 81, a template acquisition module 82, and a video generation module 83.

The information acquisition module 81 is configured to acquire performance information and interaction information in a live streaming channel; the template acquisition module 82 is configured to acquire a target video template; and the video generation module 83 is configured to generate a target video by using the target video template based on the performance information and the interaction information.

The embodiment of the present disclosure provides a video generation apparatus configured to execute the following process: acquiring performance information and interaction information in a live streaming channel; acquiring a target video template; and generating a target video by using the target video template based on the performance information and the interaction information. According to the embodiment of the present disclosure, suitable scene pictures are matched for live content of a pure audio to generate a video work, enhancing an atmosphere of an audio work.

In one embodiment, the information acquisition module 81 comprises: a performance segment acquisition unit configured to acquire a target performance segment corresponding to a live streaming channel; and an information determination unit configured to take performance information and interaction information corresponding to the target performance segment as the performance information and the interaction information, the target performance segment being a performance segment with a performance score greater than a preset threshold that corresponds to the live streaming channel.

In one embodiment, the video generation apparatus further comprises: a recording request sending module configured to, in response to a recording operation for the live streaming channel, send a recording request to a server, so as to send the recording request to a streamer client through the server; and a recording segment acquisition module configured to, when the streamer client permitting recording, acquire a recording segment as the performance segment.

In one embodiment, the template acquisition module 82 comprises: a candidate template display unit configured to, in response to a template acquisition request, display one or more candidate video templates; and a target template determination unit configured to, in response to a selection operation for any candidate video template in the one or more candidate video templates, take the selected candidate video template as the target video template.

In one embodiment, the target video comprises a plurality of performance videos, and the video generation apparatus further comprises: a video identification display module configured to display video identifications corresponding to the plurality of performance videos; a performance video operation module configured to, in response to a save operation for a target performance video corresponding to a target video identification, save the target performance video; and/or, in response to a publishing operation for a target performance video corresponding to a target video identification, publish the target performance video, the target video identification being any one or more video identifications in the video identifications corresponding to the plurality of performance videos.

In one embodiment, the apparatus further comprises: a link adding module configured to add a live streaming channel link in the target video, so as to display the live streaming channel link in a playing process of the target video.

In one embodiment, the apparatus further comprises: a live interface display module configured to, in response to an operation on the live streaming channel link, display a live interface corresponding to the live streaming channel.

In one embodiment, the video generation module 83 comprises: an editing interface display unit configured to, in response to a video editing operation, display a video editing interface; a display parameter acquisition unit configured to, in response to an input operation for the video editing interface, acquire a display parameter of the performance information and/or a display parameter of the interaction information; and a target video generation unit configured to, based on the display parameter of the performance information and/or the display parameter of the interaction information, generate the target video by using the target video template.

The video generation apparatus provided in the embodiment of the present disclosure may perform the steps performed in the video generation method provided in the embodiment of the present disclosure, and the steps, and has the beneficial effects of performing the steps, which are not repeated here.

The modules or units described above may be implemented as software components executing on one or more general-purpose processors, or as hardware performing certain functions or a combination thereof, such as a programmable logic device and/or application-specific integrated circuit. In some embodiments, these modules or units may be embodied in the form of a software product, which may be stored in a non-volatile storage medium including instructions that cause a computer device (e.g. , a personal computer, server, network device, mobile terminal, etc.) to implement the method described in the embodiments of the present disclosure. In other embodiments, the modules or units described above may be implemented on a single device, or may be distributed on a plurality of devices. The functions of these modules or units may be combined with each other or further divided into a plurality of sub-units.

Fig. 9 is a schematic structural diagram of an electronic device in an embodiment of the present disclosure. Referring below specifically to Fig. 9, it shows a schematic block diagram of an electronic device 900 suitable for implementing the embodiment of the present disclosure. The electronic device 900 in the embodiment of the present disclosure may comprise, but is not limited to, a mobile terminal such as a mobile phone, notebook computer, digital broadcast receiver, PDA (Personal Digital Assistant), PAD (tablet computer), PMP (Portable Multimedia Player), vehicle-mounted terminal (e.g., vehicle-mounted navigation terminal), and wearable terminal device, and a fixed terminal such as a digital TV, desktop computer, and smart home device. The electronic device shown in Fig. 9 is only an example, and should not bring any limitation to the functions and the use scope of the embodiment of the present disclosure.

As shown in Fig. 9, the electronic device 900 may comprise a processing means (e.g., a central processing unit, a graphics processing unit, etc.) 901, which may perform various appropriate actions and processes according to a program stored in a read-only memory (ROM) 902 or a program loaded from a storage means 908 into a random access memory (RAM) 903 to implement the image rendering method according to the embodiment of the present disclosure. In the RAM 903, various programs and data required for the operation of the terminal device 900 are also stored. The processing means 901, ROM 902, and R_AM 903 are connected to each other via a bus 904. An input/output (I/O) interface 905 is also connected to the bus 904.

Generally, the following means may be connected to the I/O interface 905: an input means 906 including, for example, a touch screen, touch pad, keyboard, mouse, camera, microphone, accelerometer, gyroscope, etc.; an output means 907 including, for example, a liquid crystal display (LCD), speaker, vibrator, etc.; the storage means 908 including, for example, a magnetic tape, hard disk, etc.; and a communication means 909. The communication means 909 may allow the terminal device 900 to perform wireless or wired communication with other devices to exchange data. While Fig. 9 illustrates a terminal device 900 having various means, it should be understood that not all illustrated means are required to be implemented or provided. More or fewer means may be alternatively implemented or provided.

In particular, according to the embodiments of the present disclosure, the processes described above with reference to the flow diagrams may be implemented as a computer software program. For example, an embodiment of the present disclosure comprises a computer program product comprising a computer program carried on a non-transitory computer-readable medium, the computer program containing program code for performing the method illustrated by the flow diagram, thereby implementing the page jump method as described above. In such an embodiment, the computer program may be downloaded and installed from a network through the communication means 909, or installed from the storage means 908, or installed from the ROM 902. The computer program, when executed by the processing means 901, performs the above functions defined in the method of the embodiments of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency) , etc., or any suitable combination of the foregoing.

In some embodiments, a client and a server may communicate using any currently known or future developed network protocol, such as HTTP (HyperText Transfer Protocol), and may be interconnected with any form or medium of digital data communication (e.g., a communication network) . Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be contained in the above electronic device; or may exist separately without being assembled into the electronic device.

The above computer-readable medium has one or more programs carried thereon, wherein the above one or more programs, when executed by the electronic device, cause the electronic device to: acquire performance information and interaction information in a live streaming channel; acquire a target video template; and generate a target video by using the target video template based on the performance information and the interaction information.

Optionally, when the above one or more programs are executed by the terminal device, the terminal device may further perform other steps described in the above embodiments.

Computer program code for performing the operation of the present disclosure may be written in one or more programming languages or a combination thereof, wherein the above programming language includes but is not limited to an obj ect-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scene where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself.

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, there is provided a video generation method, comprising: acquiring performance information and interaction information in a live streaming channel; acquiring a target video template; and generating a target video by using the target video template based on the performance information and the interaction information.

According to one or more embodiments of the present disclosure, the present disclosure provides a video generation method, wherein the acquiring performance information and interaction information in a live streaming channel comprises: acquiring a target performance segment corresponding to a live streaming channel; and taking performance information and interaction information corresponding to a target performance segment as the performance information and the interaction information, the target performance segment being a performance segment with a performance score greater than a preset threshold that corresponds to the live streaming channel.

According to one or more embodiments of the present disclosure, there is provided a video generation method, further comprising: in response to a recording operation for the live streaming channel, sending a recording request in a live streaming channel to a server, to send the recording request to a streamer client through the server; and in response to the streamer client permitting recording, acquiring a recording segment as the performance segment.

According to one or more embodiments of the present disclosure, there is provided a video generation method, wherein the acquiring a target video template comprises: in response to a template acquisition request, displaying one or more candidate video templates; and in response to a selection operation for any candidate video template in the one or more candidate video templates, taking the selected candidate video template as the target video template.

According to one or more embodiments of the present disclosure, there is provided a video generation method, wherein the target video comprises a plurality of performance videos, and the method further comprises: displaying video identifications corresponding to the plurality of performance videos; in response to a save operation for a target performance video corresponding to a target video identification, saving the target performance video; and/or in response to a publishing operation for a target performance video corresponding to a target video identification, publishing the target performance video, the target video identification being any one or more video identifications in the video identifications corresponding to the plurality of performance videos.

According to one or more embodiments of the present disclosure, there is provided a video generation method, further comprising: adding a live streaming channel link in the target video, to display the live streaming channel link in a playing process of the target video.

According to one or more embodiments of the present disclosure, there is provided a video generation method, further comprising: in response to an operation on the live streaming channel link, displaying a live interface corresponding to the live streaming channel.

According to one or more embodiments of the present disclosure, there is provided a video generation method, wherein the, generating a target video by using the target video template based on the performance information and the interaction information comprises: in response to a video editing operation, displaying a video editing interface; in response to an input operation for the video editing interface, acquiring a display parameter of the performance information and/or a display parameter of the interaction information; and based on the display parameter of the performance information and/or the display parameter of the interaction information, generating the target video by using the target video template.

According to one or more embodiments of the present disclosure, there is provided a video generation apparatus, comprising: an information acquisition module configured to acquire performance information and interaction information in a live streaming channel; a template acquisition module configured to acquire a target video template; and a video generation module configured to generate a target video by using the target video template based on the performance information and the interaction information.

According to one or more embodiments of the present disclosure, there is provided a video generation apparatus, wherein the information acquisition module comprises: a performance segment acquisition unit configured to acquire a target performance segment corresponding to a live streaming channel; and an information determination unit configured to take performance information and interaction information corresponding to the target performance segment as the performance information and the interaction information, the target performance segment being a performance segment with a performance score greater than a preset threshold that corresponds to the live streaming channel.

According to one or more embodiments of the present disclosure, there is provided a video generation apparatus, further comprising: a recording request sending module configured to, in response to a recording operation for the live streaming channel, send a recording request to a server, so as to send the recording request to a streamer client through the server; and a recording segment acquisition module configured to, in response to the streamer client permitting recording, acquire a recording segment as the performance segment.

According to one or more embodiments of the present disclosure, there is provided a video generation apparatus, wherein the template acquisition module comprises: a candidate template display unit configured to, in response to a template acquisition request, display one or more candidate video templates; and a target template determination unit configured to, in response to a selection operation for any candidate video template in the one or more candidate video templates, take the selected candidate video template as the target video template.

According to one or more embodiments of the present disclosure, there is provided a video generation apparatus, wherein the target video comprises a plurality of performance videos, and the video generation apparatus further comprises: a video identification display module configured to display video identifications corresponding to the plurality of performance videos; a performance video operation module configured to, in response to a save operation for a target performance video corresponding to a target video identification, save the target performance video; and/or in response to a publishing operation for a target performance video corresponding to a target video identification, publish the target performance video, the target video identification being any one or more video identifications in the video identifications corresponding to the plurality of performance videos.

According to one or more embodiments of the present disclosure, there is provided a video generation apparatus, further comprising: a link adding module configured to add a live streaming channel link in the target video, so as to display the live streaming channel link in a playing process of the target video.

According to one or more embodiments of the present disclosure, there is provided a video generation apparatus, further comprising: a live interface display module configured to, in response to an operation on the live streaming channel link, display a live interface corresponding to the live streaming channel.

According to one or more embodiments of the present disclosure, there is provided a video generation apparatus, wherein the video generation module comprises: an editing interface display unit configured to, in response to a video editing operation, display a video editing interface; a display parameter acquisition unit configured to, in response to an input operation for the video editing interface, acquire a display parameter of the performance information and/or a display parameter of the interaction information; and a target video generation unit configured to, based on the display parameter of the performance information and/or the display parameter of the interaction information, generate the target video by using the target video template.

According to one or more embodiments of the present disclosure, there is provided an electronic device, comprising:
one or more processors; and
a memory configured to store one or more programs,
the one or more programs, when executed by the one or more processors, cause the one or more processors to implement any of the video generation methods provided by the present disclosure.

According to one or more embodiments of the present disclosure, there is provided a computer-readable storage medium having thereon stored a computer program which, when executed by a processor, implements any of the video generation methods provided by the present disclosure.

An embodiment of the present disclosure also provides a computer program product, comprising a computer program or instructions which, when executed by a processor, implement the video generation method as described above.

The above only describes the preferred embodiments of the present disclosure and the technical principles employed. It should be appreciated by those skilled in the art that the disclosure scope involved in the present disclosure is not limited to the technical solutions formed by specific combinations of the technical features described above, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing might be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. A video generation method, comprising:
acquiring performance information and interaction information in a live streaming channel;
acquiring a target video template; and
generating, based on the performance information and the interaction information, a target video by using the target video template.

2. The video generation method according to claim 1, wherein the acquiring performance information and interaction information in a live streaming channel, comprises:
acquiring a target performance segment corresponding to the live streaming channel; and
taking performance information corresponding to the target performance segment as the performance information and taking interaction information corresponding to the target performance segment as the interaction information in the live streaming channel, wherein the target performance segment is a performance segment with a performance score greater than a preset threshold corresponding to the live streaming channel.

3. The video generation method according to claim 1 or 2, further comprising:
in response to a recording operation for the live streaming channel, sending a recording request in the live streaming channel to a server, to send the recording request to a streamer client through the server; and
in response to the streamer client passing the recording request, acquiring a recording segment as the performance segment.

4. The video generation method according to any of claims 1-3, wherein the acquiring a target video template comprises:
in response to a template acquisition request, displaying one or more candidate video templates; and
in response to a selection operation for any candidate video template in the one or more candidate video templates, taking the selected candidate video template as the target video template.

5. The video generation method according to claim 4, further comprising:
determining one or more video templates with a matching degree with the performance information and the interaction information in the live streaming channel greater than a specified threshold as the one or more candidate video templates.

6. The video generation method according to any of claims 1-5, wherein the target video comprises a plurality of performance videos, and the video generation method further comprises:
displaying video identifications corresponding to the plurality of performance videos.

7. The video generation method according to claim 6, further comprising at least one of:
in response to a save operation for a target performance video corresponding to a target video identification, saving the target performance video; or
in response to a publishing operation for a target performance video corresponding to a target video identification, publishing the target performance video, wherein the target video identification is any one or more video identifications in the video identifications corresponding to the plurality of performance videos.

8. The video generation method according to claim 1, further comprising:
in response to a link adding operation, adding a link of the live streaming channel into the target video, to display the l link in a playing process of the target video.

9. The video generation method according to claim 8, further comprising:
in response to a trigger operation on the link, displaying a live interface corresponding to the live streaming channel.

10. The video generation method according to any of claims 1-9, wherein the generating, based on the performance information and the interaction information, a target video by using the target video template, comprises:
in response to a video editing operation, displaying a video editing interface;
acquiring at least one of a display parameter of the performance information or a display parameter of the interaction information in response to an input operation for the video editing interface; and
generating the target video by using the target video template based on the at least one of a display parameter of the performance information or a display parameter of the interaction information, the performance information and the interaction information.

11. The video generation method according to claim 10, wherein the acquiring a display parameter of the performance information in response to an input operation for the video editing interface, comprises:
in response to a trigger operation on a lyric style button of the video editing interface, displaying, in the video editing interface, all lyric styles corresponding to lyrics; and
in response to a selection operation on a lyric style, replacing a current lyric style with the selected lyric style.

12. The video generation method according to any of claims 1-11, wherein generating, based on the performance information and the interaction information, a target video by using the target video template, comprises:
filling the performance information and the interaction information in the live streaming channel into a specified position of the target video template to obtain the target video.

13. A video generation apparatus, comprising:
an information acquisition module configured to acquire performance information and interaction information in a live streaming channel;
a template acquisition module configured to acquire a target video template; and
a video generation module configured to generate, based on the performance information and the interaction information, a target video by using the target video template.

14. An electronic device, comprising:
a memory; and
a processor coupled to the memory, the processor being configured to, based on instructions stored in the memory, perform the video generation method according to any of claims 1-12.

15. A computer-readable storage medium having thereon stored computer instructions which, when executed by a processor, implement the video generation method according to any of claims 1-12.

16. A computer program product, comprising a computer program or instructions which, when executed by a processor, implement the video generation method according to any of claims 1-12.

17. A computer program, comprising:
instructions which, when executed by a processor, cause the processor to perform the video generation method according to any of claims 1-12.
